Europäisches Patentamt

European Patent Office

Office européen des brevets

(19)

(11) Publication number: **0 051 656**
**B1**

(12) **EUROPEAN PATENT SPECIFICATION**

(45) Date of publication of patent specification: **09.05.84**

(21) Application number: **81901337.6**

(22) Date of filing: **14.05.81**

(86) International application number:
**PCT/NO81/00016**

(87) International publication number:
**WO 81/03262 26.11.81 Gazette 81/28**

(51) Int. Cl.³: **A 23 K 1/18,** A 23 J 1/04,
C 07 G 7/00

(54) **PROCESS FOR PRODUCTION OF FISH STIMULI (SUBSTANCES).**

(30) Priority: **14.05.80 NO 801436**

(43) Date of publication of application:
**19.05.82 Bulletin 82/20**

(45) Publication of the grant of the patent:
**09.05.84 Bulletin 84/19**

(84) Designated Contracting States:
**DE FR GB NL SE**

(56) References cited:
**AU - B - 495 075**
**DE - A - 2 145 936**
**DE - A - 2 412 299**
**DE - B - 1 171 248**
**DK - B - 117 042**
**FR - A - 2 308 320**
**GB - A - 1 221 427**

(73) Proprietor: **OPSHAUG, Kjell Rolf**
**Singasteinvn. 4**
**N-Oslo 1 (NO)**

(72) Inventor: **OPSHAUG, Kjell Rolf**
**Singasteinvn. 4**
**N-Oslo 1 (NO)**

(74) Representative: **Burman, Tore et al,**
**Bergling & Sundbergh AB P.O. Box 7645**
**S-103 94 Stockholm (SE)**

Courier Press, Leamington Spa, England.

# Description

### Technical scope

The present invention relates to a method in which protein in a given raw material is bio-chemically broken down by a reproducible process to specific water-soluble substances, which influence smell and taste senses, particularly those of fish and other sea creatures, the use of stimuli solutions in artificial bait and in fodder particularly for fish, for the purpose of getting fish to accept an artificial, yet suitably composed bait as natural fodder, or to accept a tasteless or mild tasting, yet suitably composed fodder with small amounts of stimuli substances added.

Furthermore the invention relates to a method in which fat, which is insoluble in water, (and therefore can not be detected by fish or sea creatures) can be transferred to compounds which can still influence smell and taste senses in fish and other sea creatures.

### The technical stage

Research is under way to develop methods for influencing taste characteristics in fodder for both warm and cold blooded animals.

Moreover work is in progress to develop artificial bait for the purpose of economizing food resources that are now used as bait for trade fishing, particularly mackerel.

In fishing with passive tools for example longline, the fish must work actively to swallow the bait and hook so that chances of being caught are certain. If the bait is not acceptable to the fish, both the bait and hook are rejected. Chances of being caught are then small.

From commercial fishing it is well known that fatty mackerel which contains animal plankton in its intestines, is preferably used as bait for longline fishing for cod and haddock. Yet on the other hand lean mackerel that is void of food in its digestive system, is avoided. One must assume that bait mackerels stimuli properties on the smell and taste senses in the next link of the feeding line e.g. cod, is in relation to the mackerel's food situation during the catch moment. When the mackerel is digesting its fodder, the digestive system, blood and cellular tissue contains a large amount of several water-soluble digestive products. It is reasonable to assume that at least some of these products act as stimulants on other fishes' smell and taste senses.

Moreover, some of the fat in the fishes' cellular tissue appears in the form of microscopical globules. In the blood stream these are emulsified by aid of the bile. When the fish tissue is exposed by cutting the bait, the water soluble compounds and the fat globules that are made hydrophile, are freed and act as smelling substances for fish in the sea.

Preference tests with fish in tanks fed with extract of equal quantities of bait filled digestive systems and muscle tissue from the same mackerel showed that the fish preferred bait filled digestive systems. One can therefore assume that important stimuli substances originate in the intestines, and that these later are reabsorbed by the animal and are then distributed via the blood stream to other parts of the body tissue. With this continuous stimuli transport from the digestive system to the cellular tissue it is natural that the mackerel's stimuli effect varies with its nutritious condition.

Several other methods are earlier known for breaking down by enzymes, uncontrolled digestion of cellular substance, most of them so-called hydrolysis.

Furthermore several methods are known for the production of fodder for fish and animals based on enzyme or mechanical breaking down of cellular matter.

Traditional hydrolysis of sea creatures, or parts of this takes place by the admixture of acid to different acidities where various enzyme systems have optimal working areas. Thereby obtaining that both the endocellular enzymes and digestive enzymes break down the proteins and partly the fat in an uncontrolled process to a beforehand unknown mixture of end products. Particularly peptides, amino acids, nitrous non-protein, glycerol and free fatty acids.

This type of autolysates is not easily accepted as taste substances by either humans or animals. Palatable autolysates have, however, a large market potential in fodder, bait, human nutrients and also medicines.

From Norwegian Patent Application No. 753131 it is known another method for the production of fish extract in which the main requirement is that fish protein liquifies by using two types of proteinases at different pH-values. First pH 9—10, secondly pH 5—6 at a temperature of 50—60°C. Protease types are not given. Furthermore the temperature is raised to a level above 60°C. before adding the proteinase, thereby deactivating the autolysis enzymes in the fish body.

Claim 4 states a temperature raise up to 90°C. in order to deactivate the proteases. This implies that the added proteases hardly include trypsin, since this cannot be destroyed quantitatively at 90°C.

Moreover, in Example 1, Table 1, sugar content is given in the product in accordance with the invention as 10.25%. This cannot originate from the fish, yet the description on the other hand does not mention the admixture of sugar.

From Norwegian Patent No. 136996 is known a method of production with moist fodder particularly for fish. From here it is also known how to emulsify fat with from among other compounds bile in order to attain an even distribution of fat by mixing together with other fodder ingredients, and also in the end product that the mixture is converted into a fodder emulsion.

From Norwegian Published Specification No.

138056 is known another method for the production of animal fodder by the admixture of fat. This is characterized by the fat being exposed to the influence of pancreatic lipase, or a mixture of fat and protein is exposed to the influence of pancreatic lipase and protease and the conditioned fat or mixture of fat and protein is mixed into the fodder. Further it is apparent both by the main requirement and sub-requirement that if a mixture of fat and protein is used, then the fat must be emulsified in the protein before treatment with the enzyme mixture. With this invention the fat and the emulsifying of the fat in order to attain a satisfactory fat splitting is of the utmost importance to achieve the intended effect.

This is to increase the palatability of the animal fodder by aid of the split fatty acids from the fat. Subclaims show that in compliance with the invention the temperature requirements in the reaction mixture call for 35°C.—60°C. and acidity pH 7—9.

From Norwegian Patent No. 130807 is known a method for the production of autolysate of sea creatures by acidity above or like pH 4, characterized in that the autolysis is carried out at a temperature of 40°C.—60°C. during careful stirring. The autolysis must cease when pH has reached 6.5 after which the autolysate is collected.

## Description of the invention

The purpose of the present invention is to effect a method which makes it possible qualitatively to retain stimuli substances formed by digestion. This invention relates to a method for production of stimulating substances for fish, made from cellular substances.

The method's characterizing feature is that sea creatures, particularly animal plankton, are digested artificially in two stages equivalent to the stomach and small intestine of mackerel, that to the animal plankton in stage 1 is added diluted HCl in a process tank, to the correct acidity normal for fish during digestion — pH 2.0—4.0, preferentially pH 2.5; that the mixture has pepsin added in the form of finely divided fish stomachs, extract of this or commercially available concentrated pepsin; that the temperature in the mixture is set as close to the optimal temperature for the type of enzyme product or enzyme extract used, 5°C.—40°C., preferentially 37°C.; that the temperature in the reaction mixture when the pH shows no sign of increasing be raised to 86°C. to pasteurize the reaction mixture; that the temperature after a holding time of up to 1 hour is reduced to optimal temperature for enzyme reactions on an alkaline side, preferentially 40°C., after which the second stage of the digestive process begins; that the actual acidity simultaneously is raised by the admixture of NaOH or $NH_4OH$ to pH 7.5—8.5, preferentially pH 8.0; after which trypsin is added and the reaction continues by the continuous addition of the bases when acidity is reduced to pH 7.5 — until pH stops sinking.

In addition to pepsin and trypsin other digestive enzymes may also be used, or enzyme products that are commercially available, or the conditions of the reaction can be set in accordance with its optimum.

According to the invention an artificial digestion is created in two stages, in which the added enzymes or enzyme products split the protein molecule specifically as follows:

1st stage: Pepsin catalyzed splitting in an acid reaction, optical pH 1.5—2.5.

2nd stage: Trypsin catalyzed splitting in an alkaline reaction, optimal pH 7.5—8.5.

The break down of the proteins by the proteases also frees the fat which in accordance with the invention is transformed to stimuli substances by emulsifying with bile and homogenizing with water to microscopical fat globules, yet without the fat being split by lipases or in any other way.

The practical execution of the invention is difficult due to the danger of infection by bacteria following bacteria growth and the formation of unintentional splitting products. This applies particularly to the alkaline 2nd stage of the process. For the acid stage, the pH can be maintained so low that bacteria growth can be prevented.

Because of this the pepsin source for the reaction in the acid stage in accordance with the invention can be composed of e.g. mackerel entrails or extract of this. Commercially available pepsin and trypsin can also be used for acid and alkaline reactions respectively. During the the process the fat must be protected particularly against oxidation, as reaction compounds from this are fish repellent.

In the production of fat stimuli in accordance with the invention, bile particularly that from cattle, is used as a combined emulsifier and anti-oxidation agent.

## Recommended practical methods

In the following Examples the invention is explained more fully with reference to simple practical methods without these in any way whatsoever being considered limitative for the invention.

## Example 1

Finely divided reel feed calanus (Calanus finmarchicus) with 10% grated reel feed (Calanus finmachicus) filled mackerel intestine and 0.5% concentrated pepsin were placed in a reaction vessel with stirring apparatus and $CO_2$ atmosphere.

Then hydrochloric acid was added to the mixture to pH 2.0 at a reaction temperature of 37°C. under continuous stirring. When the pH showed no sign of increasing, the temperature was raised to 80°C. to pasteurize the mixture, then reduced to 37°C., then NaOH and $NH_4OH$ and added to pH 7.8 and kept there after 1%

trypsin was added to the mixture. Stirring continued at a temperature of 37°C. until pH stopped sinking, then 1% cattle bile was added, since the amount of bile in the mackerel entrails was too low to emulsify the fat from the entrails. The mixture was freed of solid particles and used as stimuli for substance for the production of artificial bait and fodder for fish, with satisfactory results.

### Example 2

Krill was grated, 50% water added and then further finely divided with a mill to a suspension. During stirring hydrochloric acid was added up to pH 2.0 while the temperature was set at 37°C:, then 1% commercially available concentrated pepsin based on the weight of the krill was added.

After a reaction period of 2 hours the mixture was heated to a pasteurizing temperature of 86°C. After cooling down to 37°C. the actual acidity increased to pH 7.8 by the admixture of NaOH and $NH_4OH$, as well as 1% commercially available concentrated trypsin. After constant pH the undigested particles, consisting mainly of shell, were removed, since solid particles do not have a stimulating effect and can therefore not be used for other purposes.

The end product was tested at the Research Station for Salmon Fishing, Sunndalsøra. It was ascertained that salmon reacted positively to the admixture of the tasteless fodder down to 70 p.p.m. calculated on dry matter and even distribution of the fodder.

### Example 3

Whole reel feed calanus (Calanus finmarchicus) were added HCl to pH 2.8 and 0.5% concentrated pepsin during stirring at a temperature of 37°C and an atmosphere of $CO_2$ above the mixture.

After 5 hours the mixture was pasteurized at 86°C, cooled down to 37°C, NaOH and $NH_4OH$ added to pH 7.8, 0.5% concentrated trypsin added — still under an atmosphere of $CO_2$. After constant pH solid particles were removed by centrifuging, and the fat converted to stimuli by the admixture of 2% cattle bile based on the fat amount. The mixture of water soluble nitrogen content stimuli fat and bile was homogenized and used as stimuli solution in artificial bait and fodder for fish.

### Industrial uses

Stimuli for fish, produced by the following methods can chiefly be used as admixtures for fish fodder. Further, it can be used in artificial and/or natural fish bait.

### Claims

1. The process for the production of stimuli substances with cellular matter for fish, characterized by that sea creatures, particularly animal plankton, are artificially digested in 2 stages equivalent to the stomach and small intestine of mackerel, so that animal plankton in the 1st stage has diluted HCl added in a process tank, until the acidity is lowered to pH 2.0—4.0, preferentially pH 2.5; that the reaction mixture has pepsin added in the form of finely divided fish stomachs or extract of this or commercially available concentrated pepsin; that the temperature in the mixture is set at 5°C—40°C, preferentially 37°C; that the temperature in the reaction mixture when the pH shows no sign of increasing, is raised to 86°C, to pasteurize the reaction mixture; that the temperature after a holding time of up to 1 hour is then reduced to about 40°C, after which the acidity is raised simultaneously by the admixture of NaOH or $NH_4OH$ to pH 7.5—8.5, preferentially pH 8.0; after which trypsin is added and the reaction continues by continuous addition of the bases when acidity sinks to pH 7.5 — until pH stops sinking.

2. The process in accordance with claim 1, characterized in that in addition to pepsin and trypsin other digestive enzymes or enzyme products commercially available may be used.

3. The process in accordance with claims 1 and 2, characterized in that undigested remains are removed from the hydrolysate by the well known separating and/or decanting technique.

4. The process in accordance with claims 1—3, characterized in that the undigested fat fraction is returned to the hydrolysate, that the hydrolysate with the fat fraction has animal bile added and is homogenized in an in itself known manner for use as stimuli.

5. Use of stimuli substances produced in accordance with claims 1—4 as admixture in fodder and bait in any kind of concentration whatsoever.

6. Stimuli solutions for use in fish bait and fish fodder, characterized in that they are produced from sea creatures, particularly animal plankton; that this is finely divided, diluted hydrochloric acid is added to pH 2—4, preferentially 2.5; pepsin is added in the form of finely divided fish stomachs, extract from this or commercially available concentrated pepsin, that the temperature in the mixture is set at 5°C—40°C, preferentially 37°C, the temperature is raised to 86°C in order to pasteurize the mixture when pH shows no sign of increase; that the temperature is reduced to 37°C, pH is increased to 7.5—8.5, preferentially pH 8.0, by the admixture of sodium hydroxide, ammonia solution or another base, after which trypsin is added and the pH kept constant by addition of bases until pH stops sinking, after which solids are removed and the fat is emulsified with bile or is removed from the liquid.

### Revendications

1. Procédé de production de substances stimulantes avec matières cellulaires pour poissons, caractérisé en ce que des organismes marins, en particulier du plancton animal, sont soumis à une digestion artificielle correspondant à 2 étapes équivalents à l'estomac et à l'intestin grêle du maquereau, tel que de l'HCl dilué soit agouté dans la première étape au plancton animal dans une cuve de traitement jusqu'à ce que l'acidité ait baissé à un pH de 2,0—4,0, de préférence de 2,5; que le mélange réactionnel soit additionné de pepsine sous forme d'estomacs de poissons finement divisés, d'extrait de ceci ou de pepsine concentrée du commerce; que la témperature dans le mélange soit réglée à 5°C—40°C, de préférence à 37°C; que la température dans le mélange réactionnel, lorsque le pH ne montre pas de signe d'augmentation, soit portée à 86°C pour pasteuriser le mélange réactionnel; qu'apres son maintien pendant une durée allant jusqu'à 1 heure, la température soit ramenée jusqu'à environ 40°C, après quoi on augmente simultanément l'acidité jusqu'à pH 7,5—8,5, de préférence jusqu'à pH 8,0 par une addition de NaOH ou de NH$_4$OH; après quoi on ajoute de la trypsine et poursuit la réaction en ajoutant continuellement des bases lorsque l'acidité tombe à pH 7,5 jusqu'à arrêt de la chute du pH.

2. Procédé selon la revendication 1, caractérisé en ce que, en plus de la pepsine et de la trypsine, d'autres enzymes de digestion ou produits enzymatiques du commerce peuvent être utilisés.

3. Procédé selon les revendications 1 et 2, caractérisé en ce que résidus non digérés sont éliminés de l'hydrolysat par la technique de séparation et/ou de décantation bien connue.

4. Procédé selon les revendications 1 à 3, caractérisé en ce que la fraction de graisse non digérée est renvoyée dans l'hydrolysat, que l'hydrolysat avec la fraction de graisse est additionné de bile animale et homogénéisé selon une matiere bien connue en soi pour être utilisé comme substance stimulante.

5. Utilisation des substances stimulantes préparées selon les revendications 1 à 4 comme additif de la nourriture et des appâts à n'importe quelle concentration.

6. Substances stimulantes destinées aux appâts et à la nourriture des poissons, caractérisées en ce qu'elles sont préparées à partir d'organismes marins, en particulier de plancton animal; que celui-ci est finement divisé, que de l'acide chlorhydrique dilué est ajouté jusqu'à pH 2—4, de préférence pH 2,5; que la pepsine est ajoutée sous la forme d'estomacs de poissons finement divisés, d'extraits de ceci ou de pepsine concentrée du commerce, que la température dans le mélange est réglée à 5°C—40°C, de préférence à 37°C, que la température est portée à 86°C pour pasteuriser le mélange lorsque le pH ne manifeste plus de signe d'augmentation; que la température est ramenée à 37°C, que le pH est augmenté jusqu'à 7,5—8,5, de préférence jusqu'à 8 par une addition d'hydroxyde de sodium, d'une solution d'ammoniaque ou d'une autre base, après quoi de la trypsine est ajoutée et le pH est maintenu constant par addition de bases jusqu'à arrêt de la chute du pH, puis les solides sont éliminés et la graisse est émulsionnée avec de la bile ou est retirée du liquide.

**Patentansprüche**

1. Verfahren zur Herstellung anregender Substanzen mit Zellmaterial für Fisch, dadurch gekennzeichnet, daß man Meereslebewesen, besonders tierisches Plankton, in zwei Stufen äquivalent dem Magen und dem Dünndarm von Makrelen künstlich verdaut, indem man in einem Verfahrensbehälter tierischem Plankton in der ersten Stufe verdünntes HCl zusetzt, bis die Acidität auf pH 2,0 bis 4,0, vorzugsweise pH 2,5 vermindert ist, daß man dem Reaktionsgemisch Pepsin in der Form von fein zerteilten Fischmägen oder eines Extraktes hiervon oder in der Form von handelsüblichem konzentriertem Pepsin zusetzt, daß man die Temperatur in dem Gemisch auf 5°C bis 40°C, vorzugsweise 37°C einstellt, daß man die Temperatur in dem Reaktionsgemisch, wenn der pH-Wert kein Anzeichen einer Erhöhung zeigt, auf 86°C anhebt und so das Reaktionsgemisch pasteurisiert, daß man die Temperatur, nachdem man sie bis zu einer Stunde gehalten hat, dann auf etwa 40°C senkt, wonach man die Acidität gleichzeitig durch das Zumischen von NaOH oder NH$_4$OH auf pH 7,5 bis 8,5, vorzugsweise pH 8,0 anhebt, wonach man Trypsin zugibt und die Reaktion durch kontinuierliche Zugabe der Basen, wenn die Acidität auf pH 7,5 sinkt, bis der pH aufhört zu sinken, fortsetzt.

2. Verfahren nach Anspruch 1, dadurch gekennzeichnet, daß man zusätzlich zu Pepsin und Trypsin andere handelsübliche Verdauungsenzyme oder -enzymprodukte verwenden kann.

3. Verfahren nach Anspruch 1 und 2, dadurch gekennzeichnet, daß man unverdaute Rückstände aus dem Hydrolysat durch bekannte Trenn- und/oder Dekanntiermethoden entfernt.

4. Verfahren nach Anspruch 1 bis 3, dadurch gekennzeichnet, daß man die unverdaute Fettfraktion zu dem Hydrolysat zurückführt, daß man dem Hydrolysat mit der Fettfraktion tierische Galle zusetzt und es in einer für die Verwendung als anregender Stoff an sich bekannten Weise homogenisiert.

5. Verwendung anregender Substanzen, die nach Anspruch 1 bis 4 hergestellt wurden, als Beifuttermittel oder Köderbestandteil in irgendeiner Konzentration.

6. Anregende Lösungen für die Verwendung in Fischködern und Fischfutter, dadurch gekennzeichnet, daß sie aus Meereslebewesen, besonders tierischem Plankton, hergestellt sind, indem diese fein zerteilt wurden, verdünnte Salzsäure bis pH 2 bis 4, vorszugsweise pH 2,5, zugesetzt wurde, Pepsin in der Form von fein zerteilten Fischmägen, Extrakt hiervon oder handelsüblischem konzentriertem Pepsin zugegeben wurde, die Temperatur in dem Gemisch auf 5°C bis 40°C, vorzugsweise 37°C, eingestellt wurde, die Temperatur auf 86°C angehoben wurde, um das Gemisch zu pasteurisieren, wenn der pH-Wert kein Anzeichen von Steigerung zeigt, die Temperatur auf 37°C herabgesetzt wurde, der pH-Wert auf 7,5 bis 8,5, vorzugsweise pH 8,0, angehoben wurde, indem Natriumhydroxid, Ammoniaklösung oder eine andere Base zugemischt wurd, wonach Trypsin zugegeben und der pH-Wert durch Zugabe von Basen, bis der pH-Wert aufhört zu sinken, konstant gehalten wurde, wonach Feststoffe entfernt wurden und das Fett mit Galle emulgiert oder aus der Flüssigkeit entfernt wurde.